**Europäisches Patentamt**

**European Patent Office**

**Office européen des brevets**

(19)

(11) Veröffentlichungsnummer: **0 330 277**
**A2**

(12) # EUROPÄISCHE PATENTANMELDUNG

(21) Anmeldenummer: **89200409.4**

(22) Anmeldetag: **20.02.89**

(51) Int. Cl.⁴: **G02B 6/44**

(30) Priorität: **26.02.88 DE 3806010**

(43) Veröffentlichungstag der Anmeldung:
**30.08.89 Patentblatt 89/35**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Wirtz, Peter**
**Wüstenherscheid 6 a**
**D-5060 Bergisch-Gladbach(DE)**
Erfinder: **Caspar, Hans-Peter**
**Leostrasse 28**
**D-5210 Troisdorf(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Vorrichtung zum Verkleben einer Mehrzahl von Lichtwellenleitern zu einem Flachband.**

(57) Die Erfindung bezieht sich auf eine Vorrichtung zum Verkleben einer Mehrzahl von Lichtwellenleitern (LWL) zu einem Flachband. Gleichbleibend ebene und spannungsfrei verklebte Flachbänder werden dadurch ermöglicht, daß die Vorrichtung einen Kleberraum (7) aufweist, in welchen ein Einlaufkanal (10) und gegenüberliegend ein Auslaufkanal (11) für die Mehrzahl von LWL (2) münden, daß die Querschnitte des Einlaufkanals (10) und des Auslaufkanals (11) in etwa rechteckförmig und mit Übermaß den Abmessungen der nebeneinanderliegenden LWL (2) angepaßt sind, und daß der Kleberraum (7) unter einem solchen Überdruck mit Kleber gefüllt ist, daß beim Hindurchziehen der LWL (2) ein Klebertropfen an der Einführungsöffnung (15) des Einlaufkanals (12) gebildet ist.

Fig.1

## Vorrichtung zum Verkleben einer Mehrzahl von Lichtwellenleitern zu einem Flachband

Die Erfindung bezieht sich auf eine Vorrichtung zum Verkleben einer Mehrzahl von Lichtwellenleitern (LWL) zu einem Flachband.

Bei einer durch die EP-A 0 165 632 bekannten Vorrichtung dieser Art wird eine Gruppe von über eine Walze geführten LWL einseitig Kleber aufgetragen. Danach werden die LWL in um 90° gedrehter Querschnittslage aneinander geklebt. Dabei besteht die Gefahr, daß durch ungleichmäßig verteilte Klebermengen Verformungen des Bandes entstehen.

Der Erfindung liegt die Aufgabe zugrunde, eine Vorrichtung der eingangs genannten Art zu schaffen, mit welcher stets gleichbleibend ebene und spannungsfrei verklebte LWL-Flachbänder herstellbar sind.

Die Lösung gelingt dadurch, daß die Vorrichtung einen Kleberraum aufweist, in welchen ein Einlaufkanal und gegenüberliegend ein Auslaufkanal für die Mehrzahl von LWL münden, daß die Querschnitte des Einlaufkanals und des Auslaufkanals in etwa rechteckförmig und mit Übermaß den Abmessungen der nebeneinanderliegenden LWL angepaßt sind, und daß der Kleberraum unter einem solchen Überdruck mit Kleber gefüllt ist, daß beim Hindurchziehen der LWL ein Klebertropfen an der Einführungsöffnung des Einlaufkanals gebildet ist.

Auf dem Weg durch den Kleberraum werden die LWL allseitig blasenfrei mit Kleber benetzt. Da an der Einlauffläche des Einlaufkanals stets ein Klebertropfen hochgedrückt ist, werden Lufteinschlüsse in den Kleber verhindert.

Eine äußerst kompakte Flachbandform bei geringem Kleberverbrauch wird dadurch erreicht, daß am Ende des Auslaufkanals eine Rechteckdüse angeordnet ist, deren Querschnitt gegenüber demjenigen des Auslaufkanals derart verengt ist, daß die Schmalseiten der toleranzmäßig größtmöglichen Dicke eines LWL und die Bandbreite der toleranzmäßig größtmöglichen Dicke der Gesamtheit der LWL entspricht.

Ein schneller klemmfreier Durchzug der LWL wird dadurch begünstigt, daß das Übermaß der Querschnittsseiten des Einlaufkanals und/oder des Auslaufkanals das 0,2 bis 0,4- fache der Dicke eines LWL beträgt.

Auch bei hohen Durchzugsgeschwindigkeiten wird eine allseitige Benetzung der LWL dadurch gewährleistet, daß die Länge des Einlaufkanals und/oder des Auslaufkanals das 15 bis 30- fache der Faserbandbreite beträgt. Es hat sich dabei als vorteilhaft erwiesen, daß der Einlaufkanal und/oder der Auslaufkanal einen sich trichterförmig erweiternden Eingangsquerschnitt aufweisen.

Damit der Kleber, welcher durch den Einlaufkanal hochgedrückt wird, nicht durch oxydierende Atmosphäre beeinträchtigt wird, ist bei einer bevorzugten Ausführung vorgesehen, daß der Eingangsbereich des Einlaufkanals von einem inerten Gas umgeben ist.

Damit unter allen Betriebsbedingungen mit Sicherheit ein Klebertropfen an der Einlauffläche des Einlaufkanals aufrechterhalten bleibt, empfiehlt es sich, den Druck im Kleberraum so weit zu erhöhen, daß eine geringe Klebermenge aus dem Einlaufkanal herausgedrückt wird. Deshalb ist bei der erfindungsgemäßen Vorrichtung vorteilhaft vorgesehen, daß der Einlaufkanal entgegen der Schwerkraftrichtung durch einen Auffangraum ragt, in welchen eine Abflußleitung für aus dem Einlaufkanal dringenden überschüssigen Kleber mündet.

Die Benetzung der LWL mit Kleber wird insbesondere bei hohen Durchlaufgeschwindigkeiten durch Temperaturerhöhung erleichtert. Deshalb können Mittel zur Erhöhung der Klebertemperatur vorgesehen sein.

Am Ende des Auslaufkanals ist eine möglichst enge Rechteckdüse anzustreben, deren lichte Öffnung möglichst nicht größer als ein die eng und flach nebeneinander-liegenden LWL umhüllendes Rechteck ist.

Die genaue Einjustierung der lichten Öffnung einer Rechteckdüse wird bei einer besonders vorteilhaften Ausführungsform dadurch ermöglicht, daß die Innenflächen der Rechteckdüse durch vier aneinanderliegende Stellblöcke gebildet sind, welche zur Einstellung der Querschnittsab-messungen der Rechteckdüse jeweils gegen einen der Nachbarblöcke in Richtung der schmalen Querschnittsseite und gegenüber dem anderen Nachbarblock in Richtung der breiteren Querschnittsseite verschiebbar sind.

Bei einer bevorzugt einfach einstellbaren Ausführungsform einer solchen Rechteckdüse ist vorgesehen, daß die Stellblöcke entgegen einer Federkraft durch fixierbare Gewinnbolzen verschiebbar sind.

Die Erfindung wird anhand der Beschreibung eines in der Zeichnung dargestellten besonders vorteilhaften Ausführungsbeispiels näher erläutert.

Fig. 1 zeigt einen Querschnitt durch ein mittels einer erfindungsgemäßen Vorrichtung hergestelltes LWL-Flachband.

Fig. 2 zeigt einen Längsschnitt durch eine erfindungsgemäße Vorrichtung.

Fig. 3 zeigt in größerem Maßstab die Aufsicht auf die Einlaufflächen des Einlaufkanals nach Fig. 2.

Fig. 4 zeigt in gegenüber Figur 2 vergrößertem Maßstab einen Querschnitt durch eine Rechteckdüse mit verstellbarer lichter Öffnung.

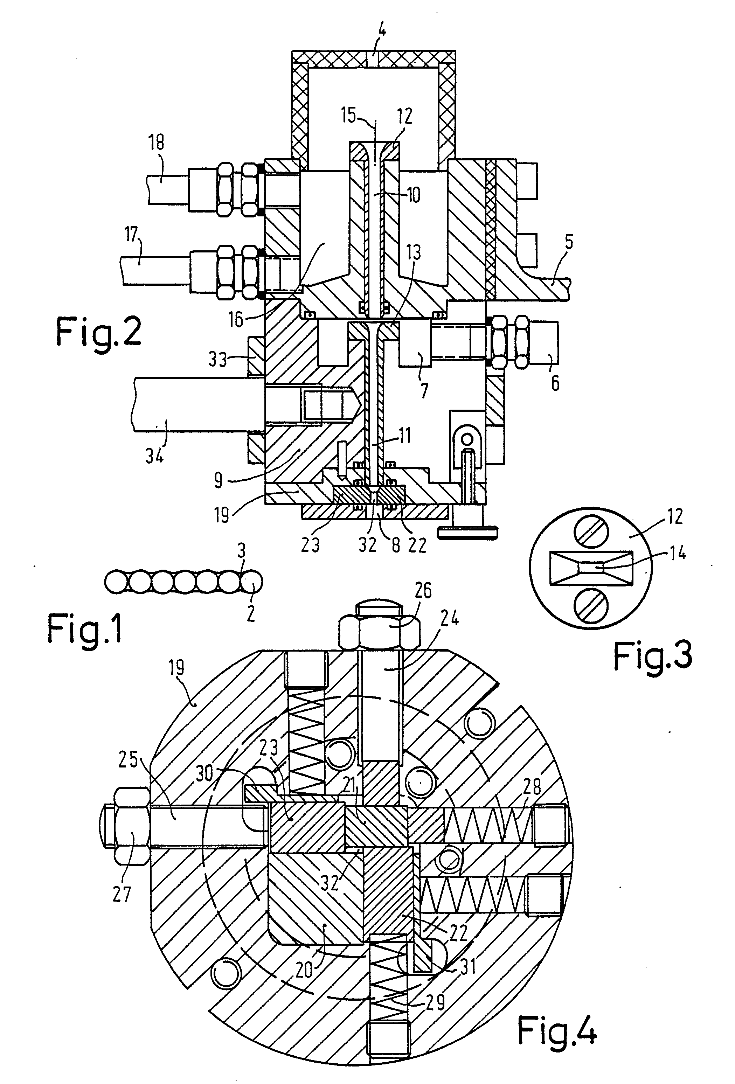

In Figur 1 sind sieben mit einem primären Coating versehene Lichtwellenleiter 2 unmittelbar aneinanderliegend durch Kleberbrücken 3 miteinader verklebt, welche an beiden Seiten des sich ergebenden Flachbandes symmetrisch gleichartig ausgebildet sein sollen. Durch ungleichförmige Kleberbrücken können über den Querschnitt oder die Länge des Flachbandes Verwerfungen wie Wölbungen der Querschnittsform oder Wellungen im Längsverlauf des LWL-Flachbandes entstehen. Darüberhinaus werden dadurch Zusatzdämpfungen in den LWL verursacht.

Derartige Ungleichförmigkeiten werden mittels einer in Fig. 2 dargestellten erfindungsgemäßen Vorrichtung weitgehend vermieden.

Eine Mehrzahl von mit einem primären Coating versehenen Lichtwellenleitern 2 wird durch die Öffnung 4 in die in Fig. 2 dargestellte, an einem Traggestell 5 befestigte Vorrichtung eingeführt. Nach der Benetzung mit Kleber, welcher über die Zuleitung 6 unter Druck in den Kleber-raum 7 zugeführt wird, werden die aus der Öffnung 8 mit einer Konfiguration nach Fig. 1 herausgeführten Lichtwellenleiter durch eine nicht dargestellte Härteeinrichtung geleitet, beispielsweise durch eine UV-Bestrahlungskammer zur Aushärtung eines durch ultraviolettes Licht vernetzbaren Acrylat-Klebers.

Mittels einer elektrisch beheizbaren Heizmanschette 33 wird der Gehäuseblock 9 erwärmt, um eine Erniedrigung der Viskosität des Klebers zu erreichen. Die Temperatur wird durch den Thermosensor 34 gemessen, welcher einen Istwert für eine Temperaturregelung liefert.

Die LWL 2 werden zunächst durch den langen Einlaufkanal 10 in den Kleberraum 7 und danach durch den ebenfalls langen Auslaufkanal 11 geführt, an dessen Ende eine enge Rechteckdüse 32 angeordnet ist. Die Kanäle 10 und 11 werden durch Kanaleinsätze 12 bzw. 13 gebildet, die einen rechteckigen Durchgangsquerschnitt aufweisen (vgl. Pos. 14 in Fig.3), welcher sich trichterförmig im Bereich der Einführungsöffnungen 15 erweitert. Die Seitenlängen des Durchgangsquerschnitts betragen das 1,3- fache bzw. (n + 0,3)- fache der Dicke eines LWL 2, wobei n die Anzahl der zu einem Flachband zu vereinigenden LWL 2 ist.

Beim Durchlauf der LWL 2 wird Kleber in entgegengesetzter Richtung durch den Einlaufkanal 10 hochgedrückt, so daß oberhalb des Einführungsbereichs 15 fortdauernd ein Klebertropfen aufrechterhalten bleibt. Der Überdruck im Kleberraum 7 ist derart gewählt, daß eine geringe Menge des Klebers in den Ringraum 16 überläuft, von wo diese Überflußmenge durch die Abflußleitung 17 abgeführt wird.

Damit der Kleber im Ringraum 16 und im Einführungs-bereich 15 des Einlaufkanals 10 nicht mit oxydierender Atmosphäre kontaktiert wird, ist in diesem Bereich eine Umspülung mit einem über die Leitung 18 eingedrückten inerten Gas vorgesehen.

Die Rechteckdüse 32 muß möglichst genau und eng der Flachbandkonfiguration nach Fig. 1 angepaßt werden, wobei natürlich die größtmöglichen Dickentoleranzen der Durchmesser der zu verarbeitenden LWL 2 zu beachten sind.

Als hervorragend geeignet hat sich die in Fig. 4 vergrößert dargestellte Anordnung erwiesen, welche eine genaue Einstellung der Rechteckseiten der Rechteckdüse 32 ermöglicht.

In einem Führungskörper 19 sind vier Stellblöcke 20,21,22 und 23 angeordnet. Der Stellblock 20 ist unverschiebbar und könnte auch Bestandteil des Führungskörpers 19 sein. Die Stellblöcke 21,22 und 23 sind im Führungskörper 19 linear verschiebbar über Stellschrauben 24 bzw. 25, deren Stellweg durch Kontermuttern 26 bzw. 27 fixierbar ist.

Durch die Stellschraube 25 sind die Stellklötze 21 und 23 entgegen der Druckfeder 28 verschiebbar, wodurch die breitere Recheckseite der Rechteckdüse 32 veränderbar ist. Mittels der Stellschraube 24 kann durch Verschiebung der Stellklötze 21 und 22 entgegen der Druckfeder 29 die Schmalseite der Rechteckdüse 32 an den Durchmesser der LWL 2 angepaßt werden.

Durch federnd angedrückte Lagereinsätze 30 und 31 wird eine Spielfreiheit der Gleitführungen für die Stellblöcke 23 bzw. 22 erreicht. Mit der in Figur 4 dargestellten Anordnung ergibt sich eine verstellbare und trotzdem allseitig geschlossene Innenkontur der Rechteckdüse 32.

**Ansprüche**

1. Vorrichtung zum Verkleben einer Mehrzahl von Lichtwellenleitern (LWL) zu einem Flachband, dadurch gekennzeichnet, daß sie einen Kleberraum (7) aufweist, in welchen ein Einlaufkanal (10) und gegenüberliegend ein Auslaufkanal (11) für die Mehrzahl von LWL (2) münden, daß die Querschnitte des Einlaufkanals (10) und des Auslaufkanals (11) in etwa rechteckförmig und mit Übermaß den Abmessungen der nebeneinanderliegenden LWL (2) angepaßt sind, und daß der Kleberraum (7) unter einem solchen Überdruck mit Kleber gefüllt ist, daß beim Hindurchziehen der LWL (2) ein Klebertropfen an der Einführungsöffnung (15) des Einlaufkanals (12) gebildet ist.

2. Vorrichtung nach Anspruch 1,
dadurch gekennzeichnet, daß am Ende des Auslaufkanals (11) eine Rechteckdüse (32) angeordnet ist, deren Querschnitt gegenüber demjenigen des Auslaufkanals (11) derart verengt ist, daß die Schmalseiten der toleranzmäßig größtmöglichen Dicke eines LWL (2) und die Breitseiten der toleranzmäßig größtmöglichen Dicke der Gesamtheit der LWL (2) entspricht.

3. Vorrichtung nach Anspruch 1 oder 2,
dadurch gekennzeichnet, daß das Übermaß der Querschnittsseiten des Einlaufkanals (10) und/oder des Auslaufkanals (11) das 0,2 bis 0,4- fache der Dicke eines LWL (2) beträgt.

4. Vorrichtung nach einem der Ansprüche 1 bis 3,
dadurch gekennzeichnet, daß die Länge des Einlauf-kanals (10) und/oder des Auslaufkanals (11) das 15 bis 30-fache der Faserbandbreite beträgt.

5. Vorrichtung nach einem der Ansprüche 1 bis 4,
dadurch gekennzeichnet, daß der Einlaufkanal (10) und/oder der Auslaufkanal (11) einen sich trichter-förmig erweiternden Eingangsquerschnitt aufwei-sen.

6. Vorrichtung nach einem der Ansprüche 1 bis 5,
dadurch gekennzeichnet, daß der Eingangsbereich (15) des Einlaufkanals (10) von einem inerten Gas umgeben ist.

7. Vorrichtung nach einem der Ansprüche 1 bis 6,
dadurch gekennzeichnet, daß der Einlaufkanal (10) entgegen der Schwerkraftrichtung durch einen Auffangraum (16) ragt, in welchen eine Abflußleitung (17) für aus dem Einlaufkanal (10) dringenden überschüssigen Kleber mündet.

8. Vorrichtung nach einem der Ansprüche 1 bis 7,
dadurch gekennzeichnet, daß Mittel (33,34) zur Erhöhung der Klebertemperatur vorgesehen sind.

9. Vorrichtung nach einem der Ansprüche 1 bis 9,
dadurch gekennzeichnet, daß die Innenflächen der Rechteckdüse (32) durch vier aneinanderliegende Stellblöcke (20, 21, 22, 23) gebildet sind, welche zur Einstellung der Querschnittsabmessungen der Rechteck-düse (32) jeweils gegen einen der Nachbarblöcke in Richtung der schmalen Querschnittsseite und gegenüber dem anderen Nachbarblock in Richtung der breiteren Querschnittsseite verschiebbar sind.

10. Vorrichtung nach einem der Ansprüche 1 bis 9,
dadurch gekennzeichnet, daß die Stellblöcke (21,22,23) entgegen einer Federkraft (28,29) durch fixierbare Gewindebolzen (24,25) verschiebbar sind.

Fig.1

Fig.2

Fig.3

Fig.4